# EUROPÄISCHE PATENTANMELDUNG

(11) **EP 2 982 705 A1**
(43) Veröffentlichungstag der Anmeldung: **10.02.2016**
(21) Anmeldenummer: 15173124.7
(22) Anmeldetag: 22.06.2015
(51) Int. Cl.: C08J 9/00, C08J 9/02, C08L 25/08, C08G 18/06, A47C 27/14

(54) **VERFAHREN ZUM HERSTELLEN EINES WEICHEN POLYURETHANSCHAUMSTOFFS**

(30) Priorität: 05.08.2014 CH 11862014
(71) Anmelder: Breckle chemicals & technics GmbH, 07570 Hohenölsen (DE)
(72) Erfinder: Breckle, Gerd, 07570 Hohenölsen (DE)
(74) Vertreter: Patentanwaltskanzlei Hübscher

(57) **Zusammenfassung**

Es wird ein Verfahren zum Herstellen eines weichen Polyurethanschaumstoffs beschrieben, wobei die gegebenenfalls mit Zusatzstoffen versetzten und einen Silikonschaumstoffstabilisator enthaltenden Reaktionskomponenten mit Wasser als Treibmittel verschäumt werden. Um eine hohe Luftdurchlässigkeit zu erreichen, wird vorgeschlagen, dass den Reaktionskomponenten neben dem Silikonschaumstoffstabilisator ein Silikonentschäumer in einem Gewichtsverhältnis von 100 : 0,5 bis 100 : 1,5 zugemischt wird.

## Beschreibung

Die Erfindung bezieht sich auf ein Verfahren zum Herstellen eines weichen Polyurethanschaumstoffs, wobei die gegebenenfalls mit Zusatzstoffen versetzten und einen Silikonschaumstoffstabilisator enthaltenden Reaktionskomponenten mit Wasser als Treibmittel verschäumt werden.

Matratzen aus einem weichen Polyurethanschaumstoff zeichnen sich durch gute Eigenschaften hinsichtlich der Elastizität, einer physiologisch angenehmen Rückstellelastizität, einer einstellbaren Festigkeit und einer Wärmedämmung aus. Die Luft- und Dampfdurchlässigkeit ist allerdings verbesserungswürdig, weil es in einem hierfür maßgebenden Temperaturbereich bis 40 °C aufgrund von Schweißabsonderungen des Körpers während der Schlafphase zu einem Feuchtigkeitsstau kommen kann, und zwar wegen einer unzureichenden Belüftung durch die Matratze. als Maß für die Luftdurchlässigkeit von Matratzen kann jener Druck angegeben werden, der erforderlich ist, um eine 10 cm dicke Matratze kontinuierlich mit Luft zu durchströmen. Bei üblichen Polyurethanschaumstoffen mit einem Raumgewicht von 35 bis 40 kg/m³ kann dieser Druck mit 12 bis 18 mmWS angegeben werden, der mit zunehmendem Raumgewicht in Abhängigkeit von der jeweiligen Art des Polyurethanschaumstoffs erheblich ansteigt und beispielsweise für viskoelastische Polyurethanschäume mit einem Raumgewicht zwischen 50 und 65 kg/m³ 450 bis 500 mmWS beträgt. Da aus Gründen eines gesteigerten Liegekomforts die Entwicklung zu Matratzen mit viskoelstischen Eigenschaften geht, kommt eine Reduzierung des Raumgewichts zur Verbesserung der Luftdurchlässigkeit kaum in Frage.

Der Erfindung liegt somit die Aufgabe zugrunde, ein Verfahren zum Herstellen weicher, insbesondere für Matratzen geeigneter Polyurethanschaumstoffe anzugeben, mit dessen Hilfe eine vergleichsweise hohe Luftdurchlässigkeit bei Raumgewichten über 40 kg/m³ sichergestellt werden kann.

Ausgehend von einem Verfahren der eingangs geschilderten Art löst die Erfindung die gestellte Aufgabe dadurch, dass den Reaktionskomponenten neben dem Silikonschaumstoffstabilisator ein Silikonentschäumer in einem Gewichtsverhältnis von 100 : 0,5 bis 100 : 1,5 zugemischt wird.

Durch die Kombination von Silikonschaumstoffstabilisatoren, wie sie standardmäßig bei Produkten aus einem weichen Polyurethanschaumstoff eingesetzt werden, und einer ausgewogenen Menge an Silikonentschäumern, wie sie bei der Entschäumung von netzmittelhaltigen Lösungen und Dispersionen Verwendung finden, gelingt es in überraschender Weise, einerseits den Anteil an geschlossenen Poren entscheidend zu verringern und anderseits die Poren zu vergrößern, sodass der Strömungswiderstand durch solche Polyurethanschaumstoffe merklich reduziert werden kann.

Als Schaumstoffstabilisatoren können mit gutem Erfolg SiloxanPolyolefinoxidcopolymere in einer auf die Reaktionskomponenten des Polyurethanschaumstoffs bezogenen Menge von 0,8 bis 2,0 Gew.% eingesetzt werden, die im Sinne der Vergrößerung der Offenporigkeit des Polyurethanschaumstoffs gut mit Ölen auf der Basis von Dimethylpolysiloxanen als Siliokonentschäumer zusammenwirken.

Die erfindungsgemäße Wirkung wird anhand der nachfolgenden Beispiele verdeutlicht, in denen ein erfindungsgemäßer Polyurethanschaumstoff einem Vergleichsschaumstoff mit der gleichen Zusammensetzung aber ohne Silikonentschäumer gegenübergestellt wird.

### Vergleichsbeispiel 1

87 Gewichtsteile eines Polyol (Triol auf Basis von Trimethyolpropan und Propylenoxid mit einer OH-Zahl von 50(+/- 2) mg KOH/g, 13 Gewichtsteile Calciumcarbonat (4 - 5 mm Korngröße) als Füllstoff, 0,9 Gewichtsteile eines SiloxanPolyolefinoxidcopolymers (NIAX L 620 der Firma Momentiv, USA) als Silikonschaumstabilisator, 0,1 Gewichtsteile 1,4-Diazabicyclo[2.2.2]octan als 33 gew.%ige Dispersion in Dipropylenglykol (DABCO 33 %) als Schäumungskatalysator, 0,3 Gewichtsteile Dymethylcyclohexylamin als Schäumungskatalysator, 0,17 Gewichtsteile Zinn-II-oktoat als weiterer Schäumungskatalysator, 2,4 Gewichtsteile Wasser als Treibmittel und 33,4 Gewichtsteile Toluoldiisocyanat werden innerhalb von 5 s homogen vermischt und frei aufschäumen gelassen.

Es wird ein weicher Polyurethanschaumstoff bekannter Art erhalten.

### Beispiel 2

Es wird ein Polyurethanschaumstoff entsprechend dem Vergleichsbeispiel 1 hergestellt, jedoch mit einem Zusatz von 0,5 Gewichtsteile eines Silikonentschäumers (NIAX SC 200 in einer 2 %igen Lösung in Polyol der Firma Momentiv, USA). Das Gewichtsverhältnis zwischen dem Silikonschaumstabilisator und dem zusätzlichen Silikonentschäumer betrug 100 : 1,1.

Aus der nachstehenden Tabelle ergeben sich die unterschiedlichen Eigenschaften des erfindungsgemäßen Polyurethanschaumstoffs nach Beispiel 2 gegenüber dem Polyurethanschaumstoff nach dem Vergleichsbeispiel 1.

| | Vergleichsbeispiel 1 | Beispiel 2 |
|---|---|---|
| Rohdichte [kg/m³] | 41 | 42 |
| Stauchhärte [kPa] | 4,7 | 4,4 |
| Druckverformungsrest | 4,2% | 3,6 |
| Luftdurchlasswiderstand [mmWS] | 72 | 14 |
| Zellgröße [mm] | 0,7 | 0,5 bis 4 |

### Vergleichsbeispiel 3

70 Gewichtsteile Polyetherpolyol mit überwiegend primären Hydroxylendgruppen und einem Anteil von 25 % gepfropftem Styrolacrylnitril und einer OH-Zahl von 26 mg KOH/g, 10 Gewichtsteile trifunktionelles Polyetherpolyol mit primären Hydroxylendgruppen und einer OH-Zahl von 28 mg KOH/g, 10 Gewichtsteile Calciumcarbonat (Korngröße 5-15 mm), 2 Gewichtsteile Silikonschaumstabilisator (NIAX L 620), 0,9 Gewichtsteile Diethanolamin als Aminvernetzer, 0,66 Gewichtsteile Sorbitol in einer 33 %igen wässrigen Lösung als Hydroxylvernetzer, 0,4 Gewichtsteile DABCO 33 %, 0,06 Gewichtsteile tertiäres Amin (N,N'-Tetramethylhexamethylendiamin) als als Schäumungskatalysator, 0,13 Gewichtsteile Zinnoktoat als Schäumungskatalysator, 2,0 Gewichtsteile Wasser als Treibmittel und 30,0 Gewichtsteile Toluoldiisocyanat (NCO-Index 105) werden innerhalb von 5 s homogen vermischt und frei aufschäumen gelassen.

### Beispiel 4

Es wird ein Polyurethanschaumstoff entsprechend dem Vergleichsbeispiel 3 hergestellt, jedoch mit einem Zusatz von 0,1 Gewichtsteilen eines Silikonentschäumers (SILFOAM SE 9 in einer 16 %igen Dispersion in Wasser der Firma Wacker Chemie AG, DE). Das Gewichtsverhältnis zwischen dem Silikonschaumstabilisator und dem zusätzlichen Silikonentschäumer betrug 100 : 0,8.

Aus der nachstehenden Tabelle ergeben sich die Unterschiedlichen Eigenschaften des erfindungsgemäßen Polyurethanschaumstoffs nach Beispiel 4 gegenüber dem Polyurethanschaumstoff nach dem Vergleichsbeispiel 3.

| | Vergleichsbeispiel 3 | Beispiel 4 |
|---|---|---|
| Rohdichte [kg/m³] | 42 | 44 |
| Stauchhärte [kPa] | 3,8 | 4,2 |
| Bruchdehnung | 80 % | 75 % |
| Zugfestigkeit [kPa] | 95 | 92 |
| Rückprallelastizität | 58 % | 54 % |
| Druckverformungsrest | 5,8 % | 5 % |
| Luftdurchlasswiderstand [mmWS] | 85 | 18 |
| Zellgröße | 0,8 bis 1,0 | 07 bis 4,4 |

## Patentansprüche

1. Verfahren zum Herstellen eines weichen Polyurethanschaumstoffs, wobei die gegebenenfalls mit Zusatzstoffen versetzten und einen Silikonschaumstoffstabilisator enthaltenden Reaktionskomponenten mit Wasser als Treibmittel verschäumt werden, **dadurch gekennzeichnet, dass** den Reaktionskomponenten neben dem Silikonschaumstoffstabilisator ein Silikonentschäumer in einem Gewichtsverhältnis 100 : 0,5 bis 100 : 1,5 zugemischt wird.

2. Verfahren nach Anspruch 1, **dadurch gekennzeichnet, dass** als Schaumstoffstabilisator ein Siloxan-Polyolefinoxidcopolymer in einer auf die Reaktionskomponenten des Polyurethanschaumstoffs bezogenen Menge von 0,8 bis 2,0 Gew.% eingesetzt wird.

3. Verfahren nach Anspruch 1 oder 2, **dadurch gekennzeichnet, dass** als Silikonentschäumer ein Öl auf der Basis von Dimethylpolysiloxanen eingesetzt wird.
